# EUROPEAN PATENT SPECIFICATION

(11) **EP 0 543 661 B1**
(45) Date of publication and mention of the grant of the patent: **17.01.1996**
(21) Application number: 92310620.7
(22) Date of filing: 20.11.1992
(51) Int. Cl.: B60C 11/12

(54) **A pneumatic tyre**
Luftreifen
Bandage pneumatique

(30) Priority: 21.11.1991 JP 333904/91
(43) Date of publication of application: 26.05.1993
(73) Proprietor: SUMITOMO RUBBER INDUSTRIES LIMITED, Kobe-shi Hyogo-ken (JP)
(72) Inventor: Shibata, Kouji, Uji-shi, Kyoto-fu (JP)
(74) Representative: Stewart, Charles Geoffrey

(56) References cited:
- DE-A- 3 432 148
- PATENT ABSTRACTS OF JAPAN vol. 015, no. 350 (M-1154)5 September 1991 & JP-A-31 36 910 (BRIDGESTONE CORP.) 11 June 1991
- DATABASE WPIL Week 9139, Derwent Publications Ltd., London, GB; AN 91-284055 3/4 39 & JP-A-3 186 403 THE YOKOHAMA RUBBER K.K.) 14 August 1991
- DATABASE WPIL Section PQ, Week 9234, Derwent Publications Ltd., London, GB; AN 92-279636 & Jp-A-4 189 606 (THE YOKOHAMA RUBBER CO. LTD) 8 July 1992
- DATABASE WPIL Week 9234, Derwent Publications Ltd., London, GB; AN 92-280321 & JP-A-4 191 104 (THE YOKOHAMA RUBBER CO. LTD. ) 9 July 1992
- PATENT ABSTRACTS OF JAPAN vol. 015, no. 174 (M-1109)2 May 1991 & JP-A-30 38 413 (SUMITOMO RUBBER INDUSTRIES LTD.) 19 February 1991
- PATENT ABSTRACTS OF JAPAN vol. 016, no. 306 (M-1276)7 June 1992 & JP-A-40 85 107 (THE YOKOHAMA RUBBER CO. LTD.) 18 March 1992

## Description

The present invention relates to a pneumatic tyre capable of enhancing the driving performance on snow, while reducing the noise.

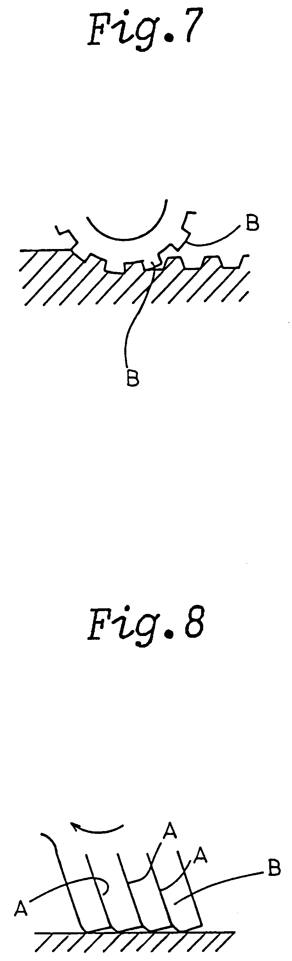

Recently, so-called all-season tyres that are capable of negotiating, for example, a road slightly covered with snow while maintaining high-speed driving performance are widely used, along with the popularity of four-wheel drive vehicles. Such a tyre is generally provided with a block pattern having a high sea ratio and sipes which are narrow grooves formed in the block surfaces in order to increase driving performance on snow-clad roads. Such block pattern of high sea ratio increase the ground-contact pressure of the blocks B so as to enhance the snow-biting performance, as shown in Fig. 7. The sipes generate a scratching effect on the road, as shown in Fig. 8. It has been proposed to obtain a higher coefficient of friction against road surface by combining the above mentioned effects.

However, such high sea ratios impair tyre noise performance. Because, for example, to increase the groove area of the circumferential grooves causes high-frequency waves in the order of 800 to 1200 Hz due to columnar resonance of the air therein. Also increases of groove area of the lateral grooves induces so-called road noise due to the pitch noises as an impact noise and pumping noise occurring when the blocks impinge against the road surface.

Increasing sipes, on the other hand, leads to inferior block rigidity, and interferes with steering stability.

Thus, there exists a contradictory relationship between snow driving performance and noise performance as well as steering stability, which has been conventionally quite difficult to satisfy sufficiently.

A tyre according to the preamble of claim 1 is known from JP-A-3 136 910.

It is a primary object of the invention to provide a pneumatic tyre capable of most effectively achieving good snow driving performance.

According to one aspect of the present invention a pneumatic tyre having a tread (2) divided into blocks (B) by tread grooves (10) comprises circumferential grooves (G,G1,G2) extending in the tyre's circumferential direction and lateral grooves (Y,Y1,Y2) intersecting the longitudinal grooves, the tread (2) having tread edges including edges around the periphery of each block (B,B1,B2) and edges along the sides (f1,f2,f3,f4) of grooves or sipes (M1,M2) provided in the blocks (B2) and one end of which is terminated in the block (B2); the tread edge, defined as the sum (ΣE) of block edges, having a lateral edge density α defined as the ratio A/S of the sum A of the length components (Re9,Re10,Ro12,Rf1,Rf3) in the lateral direction of the tread edge which faces towards the tread leading edge of the tyre and which are in the ground-contact zone (Q) of the tread (2) in the specific condition where the tyre is mounted on its regular rim, inflated with its specific internal pressure and charged with its specific load to the area S of the ground-contact zone (Q) is in the range of 0.085 to 0.15(1/mm); characterised in that the ratio α/β of the lateral edge density α to the circumferential edge density β defined as the ratio BL/S of the sum BL of the length components (Le10.....Le14, Lf2, Lf3) in the circumferential direction of the tread edges (e10,....e14,f2,f3) which face towards one of the outer edges (K) of the ground-contact zone and are placed in the ground-contact zone (Q) to the area S of the ground-contact zone (Q) is in the range of 2.0 to 3.5.

As a result the snow traction performance is significantly increased by the lateral edge density α being 0.085 to 0.15 (per mm), which is higher than that in a conventional tyre.

On the contrary, the ratio α/β between the densities is limited to be within the range of 2.0 to 3.5, which is much smaller than a conventional tyre by reducing the circumferential edge density β. Therefore, the balance between the snow traction performance and lateral grip force is optimised. Thus the steering stability on the snow is increased and driving performance on the snow considerably is enhanced.

In addition, as decrease of the circumferential edge density β is involved in the limitation of density ratio α/β, an overall increase of edges is restricted, the block rigidity is maintained as a result, and good steering stability on normal roads is simultaneously achieved.

Moreover, because the improvement in driving performance on snow is maximised at any sea ratio condition, reduction of sea ratio is promoted and improvement in tyre noise can be achieved.

An embodiment of the present invention will now be described, by way of example only, referring to the attached drawings, in which:
Fig. 1 is a sectional view showing an embodiment of the invention;
Fig. 2 is a developed view of a tread surface showing an example of a block pattern;
Fig. 3 is a diagram explaining the lateral edge density;

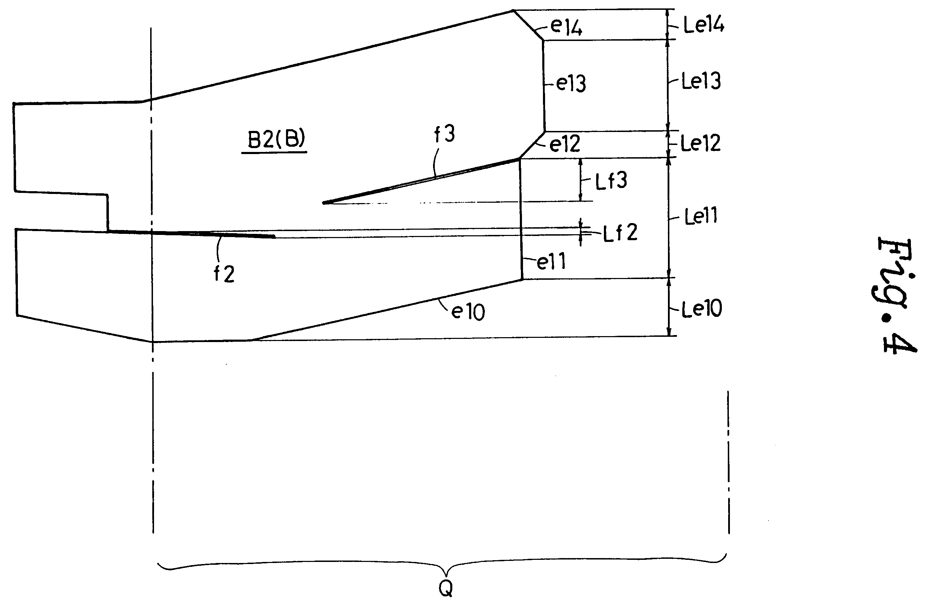

Fig. 4 is a diagram explaining the circumferential edge density;
Fig. 5 is a diagram showing values of the sea ratio and lateral edge density of a conventional tyre;
Fig. 6 is a diagram showing values of the lateral edge density and circumferential edge density of a conventional tyre;
Fig. 7 is a diagram showing snow biting performance by blocks; and
Fig. 8 is a diagram showing the scratching effect to the road by sipings.

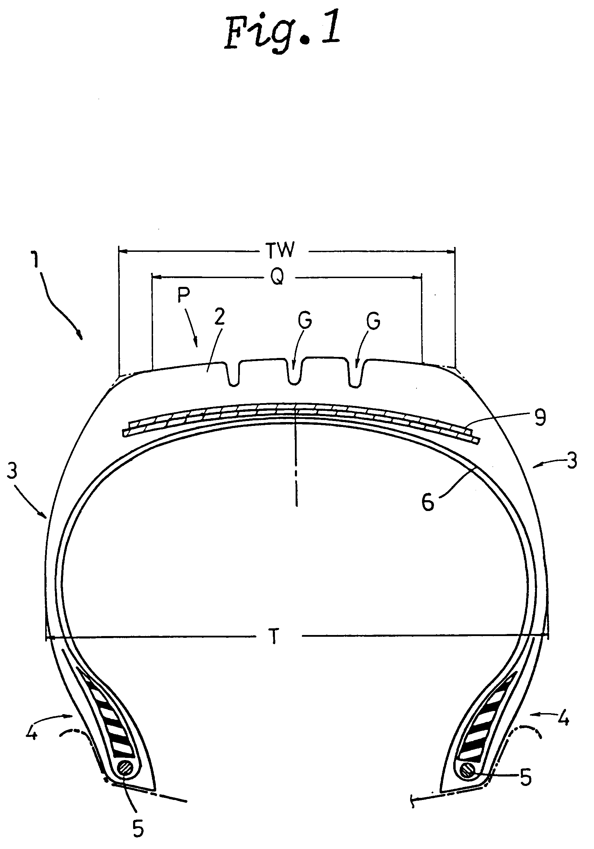

In Fig. 1, a pneumatic tyre 1 comprises a tread 2 with a block pattern P, a pair of sidewalls 3 extending inwardly in the radial direction of the tyre from both edges of the tread 2 and beads 4 one located at an inward end of each sidewall 3. In addition, the pneumatic tyre 1 comprises a carcass 6 extending from the tread 2 through the sidewalls parts 3 and turned up at each edge around a bead core 5 in the bead 4, and a belt layer 9 disposed outside in the tyre's radial direction of the carcass 6 and in the tread 2 so as to provide a hoop effect reinforcement for the tread 2.

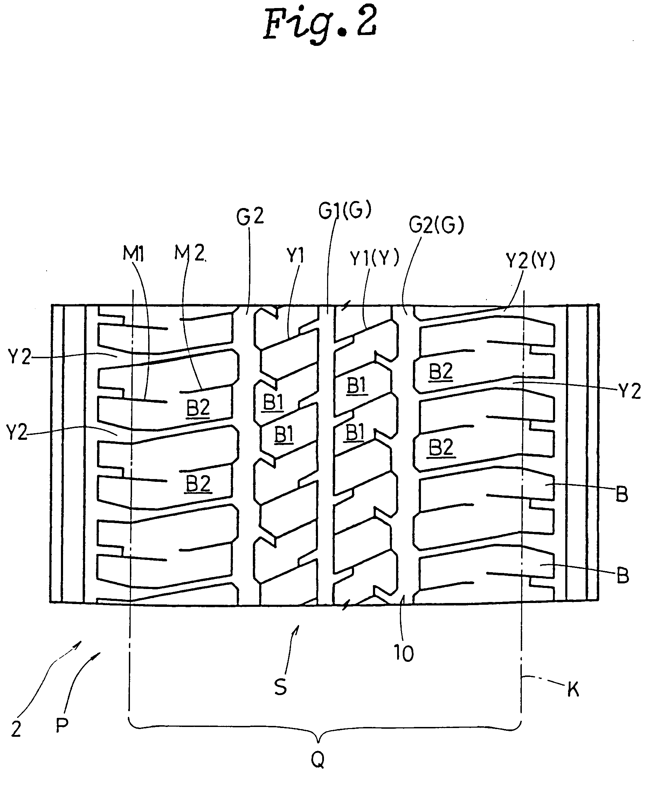

The tread surface or pattern, as shown in Fig. 2, is divided into plural blocks B by tread grooves 10 which have a plurality of circumferential grooves G extending in the tyre's circumferential direction and a plurality of lateral grooves Y intersecting the circumferential grooves G, thereby forming the block pattern P.

In this embodiment, the circumferential grooves G include an inner circumferential groove G1 extending along the tyre's equator and outer circumferential grooves G2 disposed on both sides thereof. The lateral grooves Y include inner lateral grooves Y1 in the form of narrow grooves each dividing the area between the circumferential grooves G1 and G2 into blocks B1, and outer lateral grooves Y2 in the form of wide grooves dividing the area between the circumferential grooves G2 and tread edges into blocks B2. The block B2 of this embodiment is provided with narrow grooves or sipes M1, M2 in the form of narrow grooves extending from the tread edge and the circumferential groove G2 and terminated in the blocks B2, respectively.

In order to most effectively achieve driving performance on snow with the tyre with such a block pattern P, the lateral edge density α of the tread edge in the entire area of the ground-contact zone Q is set at 0.085 to 0.15 (1/mm) and the ratio α/β of the lateral edge density α to circumferential edge density β is set in the range of 2.0 to 3.5.

The ground-contact zone Q is defined as the circular belt zone of the tread in contact with the ground over an entire tread circumference, when the tyre is rotated as mounted on its regular rim, inflated to its specific design internal pressure, and loaded to its specific design load.

The tread edge is defined as the sum (ΣE) of block edges E formed in the blocks B, and is explained more clearly by reference to block B2 below.

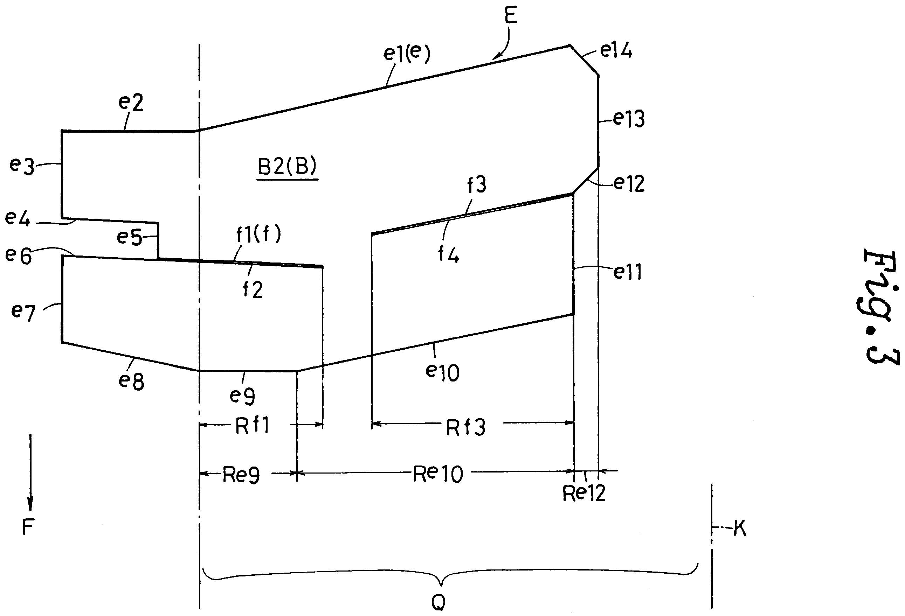

The block edges comprise, as shown in Fig. 3, edges e1 to e14 extending around the periphery of the blocks B2 and edges f1 to f4 extending into the blocks as grooves or sipes M1, M2 with at least one end thereof terminated in the block B2. Among the edges e1 to e14 and the edges f1 to f4, the edges e9, e10, e12, f1, f3 are positioned within the ground-contact zone Q and facing towards the treading side F of the tyre (i.e. the leading edge of the blocks) as they contact the ground.

The sum of lengths ΣR of the length components Re9, Re10, Re12, Rf1, Rf3 in the lateral direction (tyre's axial direction) of the edges e9, e10 e12, f1, f3, for all the blocks B (including the blocks B1) is referred to as the overall length A of the tread edge in the lateral direction. The ratio A/S of the overall lengths A to the area S of the ground-contact zone Q is defined as the lateral edge density α

On the other hand, among the edges e1 to e14 and the edges f1 to f4, the edges e10, e11, e12, e13, e14, f2, f3 are positioned within the ground-contact zone Q and facing towards the outer edge K of the ground-contact zone Q.

Also the sum of the lengths ΣL of the length components Le10, Le11, Le12, Le13, Le14, Lf2, Lf3 in the tyre's circumferential direction of the edges e10, e11, e12, e13, e14, f2, f3, through all blocks B is referred to as the overall length BL of the tread edge in the circumferential direction. Its ratio BL/S to the area S is defined as the circumferential edge density β.

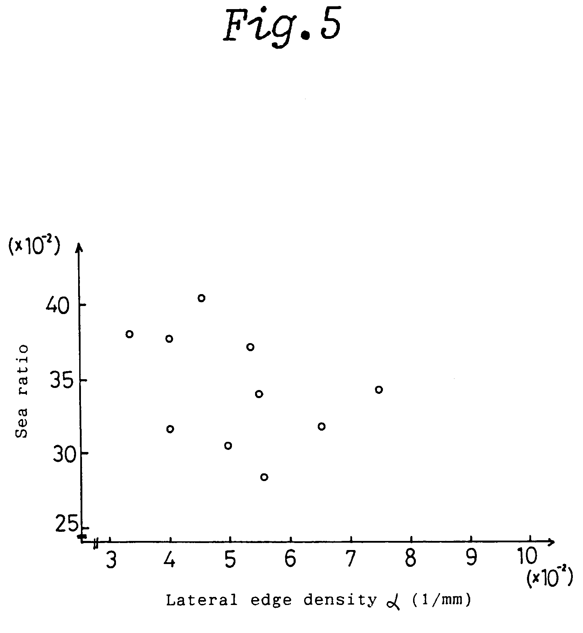

The edge components in the lateral direction are perpendicular to the driving direction of tyre, and work by kicking out the snow and biting the ice surface. Therefore, the edge components in the lateral direction contribute to the snow traction performance. By increasing the lateral edge density α so it is in the range of 0.085 to 0.15(1/mm), the snow traction performance is significantly enhanced. In Fig. 5, measurements of the lateral edge density α and the sea ratio confirmed by the inventor in a conventional tyre are shown, and it is clearly seen that the value α is substantially less than 0.085, generally in the order of 0.04 to 0.07, approximately.

On the other hand, the circumferential edge components are parallel to the tyre's driving direction, and generate the lateral grip force.

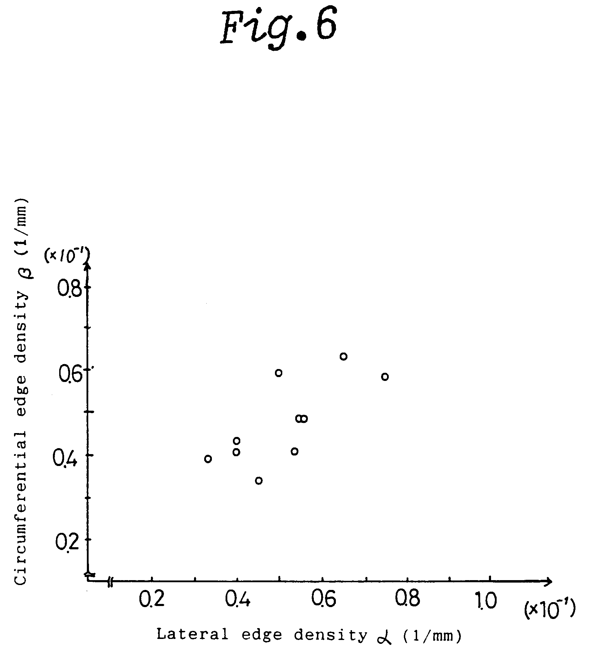

However, it was found that an excessive circumferential edge density β lowered the steering stability and driver feel performance on the snow contrarily in such a way that the rear stability is impaired in cornering on the snow. Therefore, the ratio α/β of the lateral edge density α to the circumferential edge density β is set in the a range of 2.0 to 3.5 in order to improve the balance with the snow traction and increase the snow driving performance. In a conventional tyre, as shown in Fig. 6, because the circumferential edge density β is higher such that the ratio α/β is within the range of 0.8 to 1.3, the snow driving performance was inferior, the block rigidity was unnecessarily reduced, and steering stability on normal road was decreased.

If the ratio α/β is less than 2.0, the block rigidity is reduced, steering stability on normal road is inferior, and snow driving performance is decreased as in the conventional tyre. If the ratio α/β is more than 3.5, the lateral grip is insufficient, and the vehicle safety is inferior, causing severe side slip of the tyres when cornering on snow.

Enhancement of the snow driving performance by such a block configuration allows the reduction of the sea ratio to, for example, 0.25 to 0.32 while still maintaining a desired driving performance, thus improvement of tyre noise is achievable.

The sea ratio is the ratio S1/S of the area S of ground-contact zone Q to the sea area S1 which is the entire area of tread grooves 10, and the tread width TW is reduced in comparison with a conventional tyre and in the range of 0.55 to 0.75 times the sectional width T of the tyre.

A prototype tyre having the structure shown in Fig. 1 and the block pattern P of Fig. 2 was produced in a tyre size of 195/70 R 14 based on the specifications shown in Table 1. The snow steering stability, noise and steering stability on normal roads were compared with those of a conventional tyre. In every performance test, a higher index value indicated a better performance.

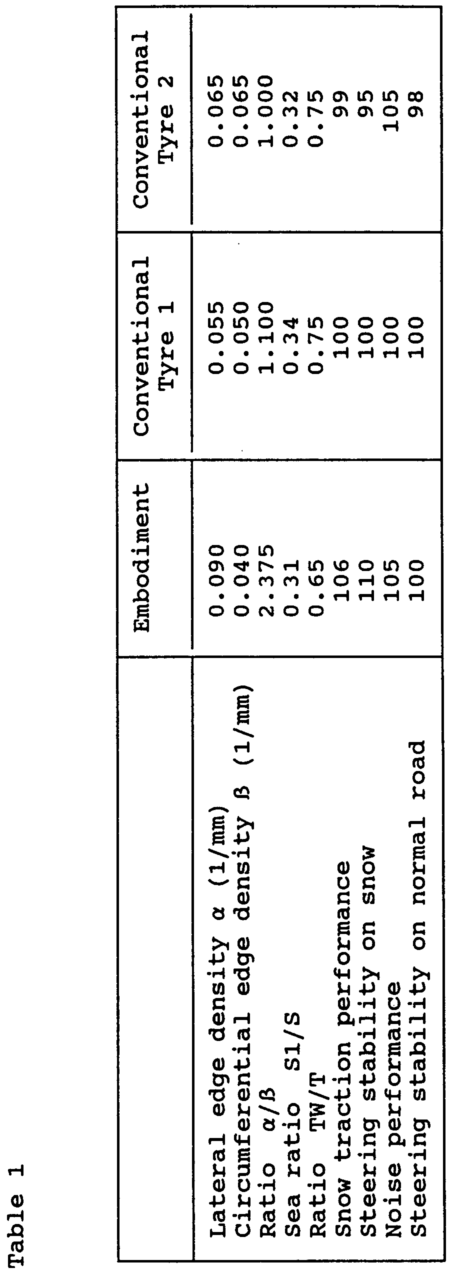

## Claims

1. A pneumatic tyre having a tread (2) divided into blocks (B) by tread grooves (10) comprising circumferential grooves (G,G1,G2) extending in the tyre's circumferential direction and lateral grooves (Y,Y1,Y2) intersecting the longitudinal grooves, the tread (2) having tread edges including edges around the periphery of each block (B,B1,B2) and edges along the sides (f1,f2,f3,f4) of grooves or sipes (M1,M2) provided in the blocks (B2) and one end of which is terminated in the block (B2); the tread edge, defined as the sum (ΣE) of block edges, having a lateral edge density α defined as the ratio A/S of the sum A of the length components (Re9,Re10,Ro12,Rf1,Rf3) in the lateral direction of the tread edge which faces towards the tread leading edge of the tyre and which are in the ground-contact zone (Q) of the tread (2) in the specific condition where the tyre is mounted on its regular rim, inflated with its specific internal pressure and charged with its specific load to the area S of the ground-contact zone (Q) is in the range of 0.085 to 0.15(1/mm); characterised in that the ratio α/β of the lateral edge density α to the circumferential edge density β defined as the ratio BL/S of the sum BL of the length components (Le10.....Le14, Lf2, Lf3) in the circumferential direction of the tread edges (e10,....e14,f2,f3) which face towards one of the outer edges (K) of the ground-contact zone and are placed in the ground-contact zone (Q) to the area S of the ground-contact zone (Q) is in the range of 2.0 to 3.5.

2. A pneumatic tyre according to claim 1, characterised in that in the ground-contact zone, a sea ratio S1/S of the area S of the ground-contact zone to the sea part area S1 which is the entire area of the tread grooves is in the range of 0.25 to 0.32.

3. A pneumatic tyre according to claim 1, characterised in that the width TW of the tread part is in the range of 0.55 to 0.75 times the sectional width T of the tyre.

## Patentansprüche

1. Ein Luftreifen mit einer Lauffläche (2), welche in Blöcke (B) geteilt ist durch Laufflächennuten (10), welche Umfangsnuten (G, G1, G2), die sich in der Umfangsrichtung des Reifens erstrecken, und laterale Nuten (Y, Y1, Y2) umfassen, welche die longitudinalen Nuten schneiden, wobei die Lauffläche (2) Laufflächenränder aufweist, welche Ränder um die Peripherie jedes Blocks (B, B1, B2) und Ränder entlang der Seiten (f1, f2, f3, f4) der Nuten oder Einschnitte (M1, M2) umfassen, welche in den Blöcken (B2) vorgesehen sind und deren eines Ende in dem Block (B2) abgeschlossen ist; der Laufflächenrand, welcher als die Summe (ΣE) der Blockränder definiert ist, eine laterale Randdichte α aufweist, welche als das Verhältnis A/S der Summe A der Längenkomponenten (Re9, Re10, Ro12, Rf1, Rf3) in der lateralen Richtung des Laufflächenrandes, welcher dem Laufflächenvorderrand des Reifens zugewandt ist, und welche sich in der Bodenberührungszone (Q) der Lauffläche (2) in dem spezifischen Zustand befinden, wo der Reifen auf seiner regulären Felge aufgezogen, mit seinem spezifischen Innendruck aufgepumpt und mit seiner spezifischen Last belastet ist, zu dem Bereich S der Bodenberührungszone (Q) definiert ist und im Bereich von 0,085 bis 0,15(1/mm) liegt;
dadurch gekennzeichnet,
daß das Verhältnis α/β der lateralen Randdichte α zur Umfangsranddichte β, welches als das Verhältnis BL/S der Summe BL der Längenkomponenten (Le10 ..... Le14, Lf2, Lf3) in der Umfangsrichtung der Laufflächenränder (e10, .... e14, f2, f3), welche einem der äußeren Ränder (K) der Bodenberührungszone zugewandt und in der Bodenberührungszone (Q) angeordnet sind, zu dem Bereich S der Bodenberührungszone (Q) definiert ist, im Bereich von 2,0 bis 3,5 liegt.

2. Ein Luftreifen nach Anspruch 1,
dadurch gekennzeichnet,
daß in der Bodenberührungszone ein See-Verhältnis S1/S des Bereiches S der Bodenberührungszone zum See-Teilbereich S1, welcher der gesamte Bereich der Laufflächennuten ist, im Bereich von 0,25 bis 0,32 liegt.

3. Ein Luftreifen nach Anspruch 1,
dadurch gekennzeichnet,
daß die Breite TW des Laufflächenteils im Bereich des 0,55- bis 0,75-fachen der Schnittbreite T des Reifens liegt.

## Revendications

1. Pneumatique ayant une bande de roulement (2) divisée en blocs (B) par des gorges (10) de bande de roulement qui comprennent des gorges circonférentielles (G, G1, G2) disposées dans la direction circonférentielle du pneumatique et des gorges latérales (Y, Y1, Y2) recoupant les gorges longitudinales, la bande de roulement (2) ayant des bords de bande de roulement qui comprennent des bords placés à la périphérie de chaque bloc (B, B1, B2) et des bords placés le long des côtés (f1, f2, f3, f4) de gorges ou fentes (M1, M2) formées dans les blocs (B2) et dont une extrémité se termine dans le bloc (B2), le bord de la bande de roulement, défini comme étant la somme (ΣE) des bords des blocs, ayant une densité de bords latéraux α définie comme étant le rapport A/S de la somme A des segments de longueur (Re9, Re10, Re12, Rf1, Rf3) dans la direction latérale du bord de la bande de roulement qui sont tournés vers le bord avant de la bande de roulement du pneumatique et qui se trouvent dans la zone de contact avec le sol (Q) de la bande de roulement (2) dans la condition particulière dans laquelle le pneumatique est monté sur sa jante normale, gonflé à sa pression interne particulière et chargé à la charge particulière, à la surface S de la zone de contact avec le sol (Q), qui est comprise entre 0,085 et 0,15 (1/mm), caractérisé en ce que le rapport α/β de la densité α des bords latéraux à la densité β des bords circonférentiels, définie comme étant le rapport BL/S de la somme BL des segments de longueur (Le10,... Le14, Lf2, Lf3) dans la direction circonférentielle des bords (e10,... e14, f2, f3) de bande de roulement qui sont tournés vers l'un des bords externes (K) de la zone de contact avec le sol et sont placés dans la zone de contact avec le sol (Q), à la surface S de la zone de contact avec le sol (Q), est compris entre 2,0 et 3,5.

2. Pneumatique selon la revendication 1, caractérisé en ce que, dans la zone de contact avec le sol, le rapport de cavités S1/S de la surface S de la zone de contact avec le sol à la surface S1 de la partie de cavité qui représente la totalité de la surface des gorges de la bande de roulement, est compris entre 0,25 et 0,32.

3. Pneumatique selon la revendication 1, caractérisé en ce que la largeur TW de la partie de bande de roulement est comprise entre 0,55 et 0,75 fois la largeur T en coupe du pneumatique.
